# EUROPEAN PATENT APPLICATION

(11) **EP 3 772 690 A1**
(43) Date of publication of application: **10.02.2021**
(21) Application number: 20190110.5
(22) Date of filing: 07.08.2020
(51) Int. Cl.: G06F 15/16, G06F 3/16

(54) **DEVICE AND METHOD FOR GENERATING CONTROL SIGNALS OF A BOAT**

(30) Priority: 08.08.2019 IT 201900014364
(71) Applicant: ULTRAFLEX S.P.A., 16015 Casella (GE) (IT)
(72) Inventor: GAI, MARCELLA, 16015 Casella (IT); DEL TURCO, MATTEO, 16015 Casella (IT)
(74) Representative: Bottino, Giovanni

(57) **Abstract**

Device for generating control signals of a boat (1), comprising an electronic control unit (3) configured to generate an output control signal to be sent to one or more actuator elements (24) based on an input control signal, which output control signal is relative to the setting of the operating conditions of said one or more actuator elements (24).

Said input control signal consists of an audio signal comprising a voice command generated by a user and relating to the travel indications of the boat (1).

Furthermore, the electronic control unit (3) comprises means for acquiring an audio signal and conversion means configured to identify said voice command and convert said voice command into said output control signal.

## Description

The present invention relates to a device for generating control signals of a boat, comprising an electronic control unit configured to generate an output control signal to be sent to one or more actuator elements.

The output control signal is generated based on an input control signal, so as to be relative to the setting of the operating conditions of said one or more actuator elements.

That which has been described above is the common configuration of the boat piloting systems known in the state of the art, in particular of the electro-systems actuated, i.e., systems with control elements which generate electrical signals which are transmitted to a control unit which deals with the management of such signals for the control of actuator elements.

The actuator elements indicate all the components of the boat, whose setting of the operating conditions has repercussions on the boat's speed and may for example consist of outboard motors, stabilizers, trim tabs, trim fins, etc.

In fact, the present invention relates not only to the generation of control signals related to the piloting and speed of the boat, but any control signal, also related to settings related to jackplates, trim tabs and bow and stern thrusters.

For example, in the systems known in the state of the art, the rotation of the helm generates an electrical signal processed by the control unit for setting the angle of the outboard motors, so as to control the direction of the boat, as well as the movement of joystick-type control members, which can control the accelerator/inverter of the outboard motors.

These piloting systems are particularly widespread and used in the latest-generation boats, especially thanks to the presence of the electronic control unit which manages the control signals, both for the simplicity of maintenance and installation compared to purely hydraulic/mechanical systems, and for the implementation possibilities of the control unit itself.

Precisely because of the implementation possibilities, electronic control units of various types exist, from the simplest to increasingly complex electronic control units, able to manage not only the piloting controls, but also external devices such as smartphones, tablets or the like, which are synchronized with the boat's system.

However, the development of the control units is leading to increasingly complex architectures, which certainly allow to increase the functionality of the boat, but which nevertheless do not facilitate the piloting of the users.

There is therefore a need not satisfied by the devices known in the state of the art to create a device for generating control signals for piloting a boat which facilitates the manoeuvres of the user, maintaining the piloting safety, up to assisting both in carrying out common operations during the boat's operation, and in identifying the correct route.

The present invention achieves the above purposes by using as an input control signal an audio signal comprising a voice command generated by a user and relating to the boat's travel indications.

The device for generating control signals is realized as described above and furthermore, the electronic control unit comprises audio signal acquisition means and conversion means configured to identify the voice command and convert it to said output control signal.

A true voice-command piloting system is therefore created.

The user can at any time vocally indicate the operation made of the boat, to control the speed of the latter.

This general concept can be expressed in different ways, so that even less experienced users can control the boat.

For example, the user may indicate the desired point of arrival: the electronic control unit acquires, recognizes and identifies the point chosen by the user and leads the user to the destination, varying the operating conditions of the actuator means.

The device object of the present invention thus allows for an automatic pilot with voice activation.

It is evident that the user may further specify features of the trip, e.g., enter the cruising speed, travel time, intermediate stops, etc.

The control unit is obviously configured to integrate the user's voice command with the information relative to the route to carry out, including water condition information, to operate motors, trim tabs, stabilizer and additional actuator elements, to safely bring the user to the destination.

In addition to the generic route, the user may also decide to send specific commands individually to each actuator element, for example to send a command to the motors to veer the boat or to increase or decrease the speed.

For this reason, according to an embodiment variant of the device object of the present invention, the conversion means comprise memory units within which there are databases containing identifying information of the actuator elements and the settings of the operating conditions thereof.

The memory units also contain associative tables which associate a voice command with information in the database.

Thanks to this configuration, the user can then send commands related to the specific settings of each individual actuator element.

The databases and associative tables will contain, for example, keywords, aimed at identifying specific terms within the voice command, such as "accelerate", "slow" for the control of the accelerator/inverter command, or "turn right" for the control of the motor orientation.

The databases and associative tables can therefore refer to state-of-the-art libraries related to the processing of voice commands, as well as to the processing of voice commands carried out through artificial intelligence algorithms.

According to a preferred embodiment, the acquisition means comprise audio signal filtering means configured to isolate the user's voice command from the rest of the audio signal acquired by the acquisition means.

This feature is particularly advantageous for the correct detection of the voice command in a particularly noisy environment such as that of boats, especially during travel.

The presence of the filtering means is particularly advantageous in the case of outboard motors, which produce particularly intense noises and which disturb the correct acquisition of the voice command generated by the user.

As will be described later, the filtering means can detect the noise generated by the boat, the motor, the impact of the hull against the waves of the sea, in order to filter those certain frequencies and facilitate the task of the conversion means, which will have to process a "clean" signal, in which the terms related to piloting settings will be easily identifiable.

The filtering of the input signal has a further advantageous aspect.

In fact, since most of the noise disturbing the input audio signal is provided by the motors and by the wind, which are generally known a priori, knowing the type of motors it is possible to customize the filtering of the input audio signal based on the boat on which the device object of the present invention is installed, so that the recognition of the voice command is increasingly efficient and effective.

For this reason, it can be included that the control unit comprises additional memory units in which to memorize some typical sounds and noises of boats.

For example, it is possible to memorize the noises of a particular type of motor, or even of the wind, perhaps according to the seasons and navigation areas.

The memorized sounds and noises can allow the correct operation of the acquisition means to be set, also in automatic mode, simply by setting the type of motor (make/model) and/or the navigation area.

According to a refinement, it is possible to include recording means, aimed at recording sounds and noises during navigation.

The recorded sounds and noises can then be used to adjust the filtering means so that the voice command becomes clearer and less prone to misinterpretation by the system.

Such recording means may be integrated within the control unit and/or the acquisition means, or may be independent devices connectable to the control unit.

The acquisition means and the conversion means may be provided within a single device, or may consist of two devices physically separated from each other, but connected, at least for the transmission of the data acquired by the acquisition means.

In this second hypothesis, it is possible to provide that the acquisition means are connected to the conversion means via wireless communication means.

For example, the acquisition means may consist of a state-of-the-art microphone, with a transmission unit for transmitting audio signals to the conversion unit.

This configuration allows remote control signals to be obtained, i.e., the user does not necessarily have to be at the control panel in order to be able to indicate to the vessel the correct route and operating conditions of the various actuators.

Consider how this aspect can be particularly advantageous during manoeuvres inside docks: the user can move from one point of the boat to another and control the setting of the actuator means in order to carry out the manoeuvres, limiting the possibility of colliding with parts of the dock and/or other boats as much as possible.

As described above, the control unit object of the present invention can receive and process voice commands related to the route to be followed or the destination to be reached, or specific voice commands for setting each individual actuator element.

For this reason, according to a possible embodiment of the control unit object of the present invention, connection means are present for connecting one or more control members to said control unit.

This configuration allows to obtain a dual benefit.

First of all, from a safety standpoint, the possibility of controlling the boat manually and adjusting the operating settings of the actuators is maintained, integrating the audio input signal.

In addition, the user may for example maintain the manual direction setting, through the orientation of the motors, and decide for example to control the accelerator/inverter device vocally.

In this way the user is not obliged to have a hand always engaged on the acceleration/inversion control, so that both the piloting of the boat and especially the carrying out of manoeuvres are facilitated.

Given the advantageous aspects described above relating to the device for generating control signals for piloting a boat, the present invention also relates to a method for controlling a boat.

In particular, the method comprises the following steps:
a) generating at least one input control signal to set the operating conditions of one or more actuator elements of the boat;
b) acquiring the input control signal;
c) generating an output control signal to set the operation of the actuator elements.

Such method steps are those commonly used during the operation of a boat, wherein a user controls a control member, such as the helm, through which it generates a control signal and direction setting of the motors.

Unlike the methods known in the state of the art, the method object of the present invention provides that the input control signal consists of an audio signal, and that step c) of generating the output control signal provides a step relative to converting the audio signal into the output control signal.

A method for controlling a boat using the voice commands of a user to set the route or navigating conditions of a boat is thus obtained.

As anticipated, in order to improve the processing of the audio input signal, an audio signal filtering step may be included.

To make the filtering more effective, a variant of the method of the present invention includes acquiring the noise generated by the boat while travelling and using such noise as a "noise baseline", i.e., as a basis to be used for filtering the signal, so as to isolate the voice commands of the user as much as possible.

As anticipated, it is possible to provide a step of recording the sounds or noises emitted by the boat, also during navigation and according to different conditions of the boat and the motors.

In addition, in order to increase the safety of the method object of the present invention, a voice recognition step of a predetermined user may be provided.

To perform this step, a state-of-the-art speech recognition algorithm can be used, which is an algorithm which selects particular voice inflections, tone, pronunciation defects, from a user to correctly identify the user and receive voice commands only from him.

Finally, it is evident that the device object of the present invention can be integrated, as has already been described in part, within piloting systems, preferably electro-hydraulic or electro-mechanical boat piloting systems.

For this reason, the present invention also relates to a piloting system of a boat comprising one or more actuator elements, the setting of which allows changing the speed of the boat, one or more control members, aimed at setting the operation of the actuator elements and a central unit adapted to connect the control members to the actuator elements.

As in the state-of-the-art systems, the central unit receives one or more input control signals from the control members and generates corresponding output control signals for setting the actuator elements.

In particular, in order to obtain all of the advantages discussed above, the central unit comprises a control unit realized according to one or more of the features discussed above.

These and other features and advantages of the present invention will become clearer from the following description of some exemplary embodiments illustrated in the attached drawings in which:
figure 1 illustrates a schematic diagram of a possible embodiment of the device for generating control signals for piloting a boat, object of the present invention;
figure 2 illustrates a flow chart intended to represent a possible embodiment of the control method of a boat object of the present invention.

Note that the embodiment illustrated in the figures attached to the present application is shown to better understand the advantages and features of the device and method claimed below.

This embodiment is therefore to be intended for purely illustrative and non-limiting purpose of the inventive concept of the present invention, i.e., that of realizing a control system for a boat which allows controlling the same through the voice commands of a user.

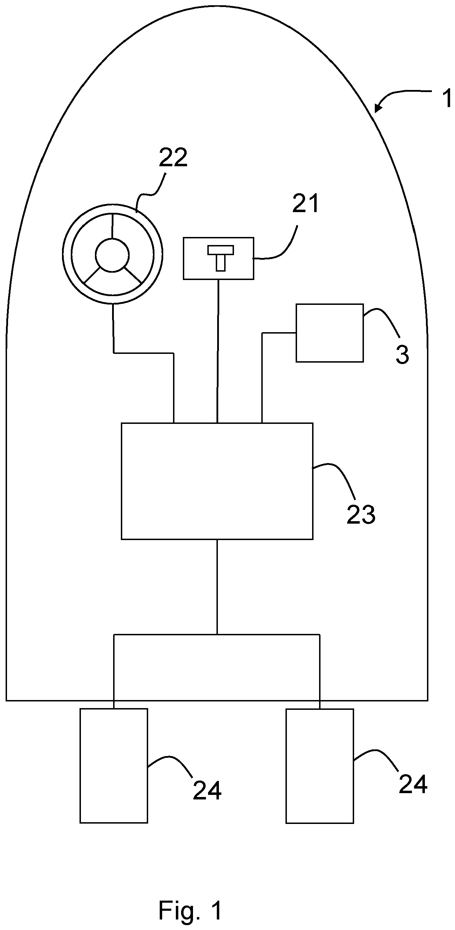

With particular reference to figure 1, a schematic diagram is illustrated, in functional blocks, of a piloting system of a boat 1, in which the device for generating control signals object of the present invention is installed.

The boat 1 has two outboard motors 24, the orientation of which is controlled by a helm 22, while the power delivered by the motors 24 is controlled by an acceleration/inversion lever 21.

Both the helm 22 and the lever 21 generate input control signals which are processed by the central unit 23 to generate output control signals, aimed at setting the operation of the outboard motors 24.

Advantageously, the helm 22 and the lever 21 have electrical transducers, so that the signals sent to the central unit 23 are electrical signals.

Downstream of the central unit 23 it is possible to provide an electro-hydraulic system or an electro-mechanical system, known in the state of the art, for the activation and movement of the outboard motors 24.

Obviously, the central unit 23 includes all the components necessary to control the boat 1, such as for example control and feedback sensors about the operation of the outboard motors 24, data processing units, storage units, etc.

In the particular case of figure 1, the central unit 23 provides an electronic control unit 3 comprising means for acquiring an audio signal and means for converting the audio signal into the output control signal for controlling the outboard motors 24.

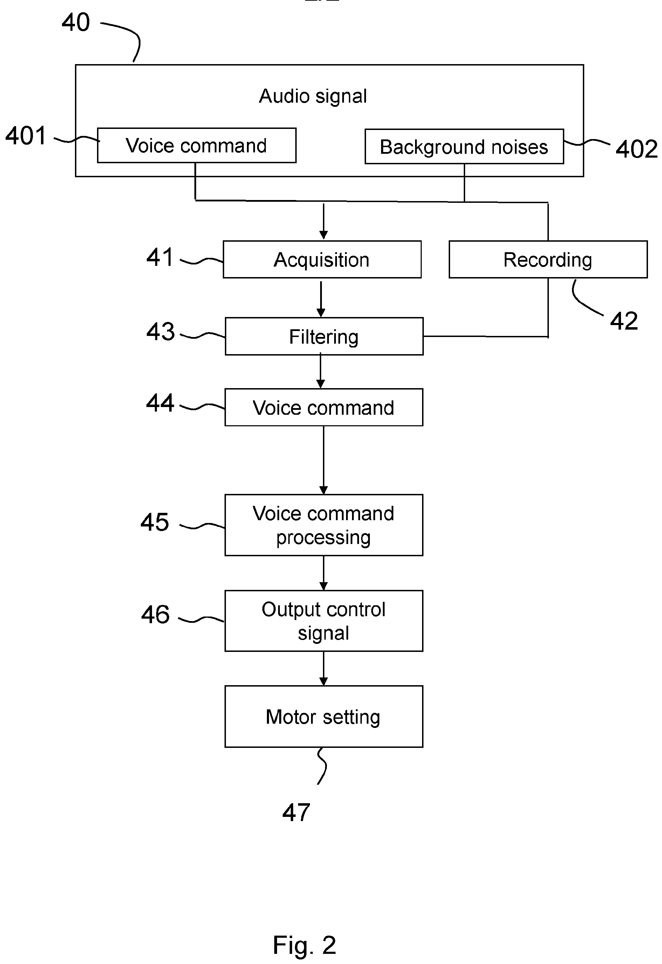

The operation of said control unit 3 will be described in detail later with particular reference to figure 2, however in practice the pilot generates a voice command relative to the setting of the motors 24 and the control unit 3 processes said command and generates an output control signal which is replaced by that generated by the central unit 23.

The example illustrated in figure 1 relates to the setting of the operating conditions of the motors 24, but it is evident that such a system can also operate with any actuator element of the boat 1, i.e., any navigational component, such as for example trim tabs, stabilizers, trim fins, etc.

It is further specified that the control unit 3 may be connected or fully integrated within the central unit 23.

The output control signals which are generated can therefore be voice commands or manual commands generated by the user through the movement of the helm 22 and/or the lever 21.

The system of figure 1 can obviously handle this dual nature of commands, also providing priority for one command over another.

For safety reasons, for example, manual commands may be expected to take precedence over voice commands, i.e., the manually operated lever 21 will generate a command which within the central unit 23 will take precedence over a voice command related to the acceleration/deceleration of the motors 24.

The control unit 3 can therefore generate specific commands for each actuator element and for this reason advantageously has memory units within which there are databases containing information identifying the actuator elements and the settings of said actuator elements, together with associative tables aimed at associating a voice command with the information present in the database.

Basically inside the memory units there are keywords, which identify the actuator elements and their operating conditions, such as for example "motor", "cylinder", "propeller", "stern", "bow" and "accelerate", "decelerate", "right turn/veer", "left turn/veer", etc.

In this way these keywords are recognized within the user's voice command and the output control signal is set accordingly.

Artificial intelligence algorithms can be used to create the associative tables.

As mentioned above, figure 2 describes the control method of a boat object of the present invention and which is at the basis of the operation of generating the output control signals of the control unit 3, of figure 1.

The flow chart of figure 2 is obviously limited to illustrating the generation of the output control signal from the control unit 3, but as previously illustrated, such output control signal may be integrated with the output control signals generated by the central unit 23.

With particular reference to figure 2, the acquisition means of the control unit 3 acquire in step 41 an audio signal produced in step 40.

The acquisition means may for example comprise a state-of-the-art microphone which records the sounds of the surrounding environment.

This microphone may be continuously recording or activated at the time of acquisition.

The activation can be either manual, user-driven, or automatic, for example as soon as the user's voice is detected.

As soon as the user generates a voice command, the audio signal which is acquired has two contributions, the actual voice command, 401, and background noise 402, relating to the noise generated by the mechanical parts of the boat and by the wind: both contributions are acquired in a separate manner, step 41.

In order to isolate the voice command, it may be included that the acquired audio signal undergoes a filtering step 43.

The filtering step 43 is intended to eliminate all the contributions which do not belong to the voice command 401, i.e., it deals with identifying the characteristic frequencies of the user's voice, to eliminate all the others.

Different filtering algorithms are known, whereby step 43 may use such algorithms, preferably in combination with the use of artificial intelligence algorithms.

Advantageously, the filtering step 43 is preceded by a background noise recording step 42, so that the audio signal recorded in step 42 can be subtracted from the audio signal acquired in step 41, to filter the latter and obtain the clean voice command, step 44.

The recording step 42 may, for example, be performed during navigation, in the absence of the user's voice.

Such recorded signals may be stored within the memory unit of the control unit 3, and/or within remote units communicating with the control unit 3 so as to properly set the control unit.

In fact, it will be possible to create a database in which to divide the background noise records by boat and/or by type of motors or components used.

The climate conditions and/or wind power and/or cruising speed may also be entered into the same database.

In this way the user can set all these accessory conditions and automatically the conversion means, adapted to process the audio signal, will "wait" for a certain type of background noise, with which to filter the input audio signal to identify the voice command of the user.

Once the "clean" voice command, step 44, has been obtained, the conversion means deal with processing the voice command, step 45, aimed at translating the voice command into an output control signal, step 46, to set the operating conditions of the actuator means.

For example, step 45 may be processed using the databases and associative tables provided within the memory unit of the control unit 3.

For example, if the user wants to change the route, the voice command "veer right" will suffice, so that the conversion means recognize the terms "veer" and "right" to translate this command into a command to be sent to the motors, step 47, so that they rotate to the right with a predetermined angle.

In a similar way, it will be possible to accelerate the speed, simply with the voice command "accelerate", so that the motors increase the number of revolutions by a predetermined value.

The predetermined values and angles may, according to a possible embodiment, be set a priori by the user.

Finally, it should be noted that as described above, it is clear how the control unit 3 can communicate with portable devices such as smartphones, tablets or the like.

In this case, the portable devices, in addition to setting the operating conditions of the control unit 3 at the user's discretion, may also comprise the acquisition means of the control unit 3, that is, be responsible for recording the audio signal, so that a user can control the boat from his smartphone.

While the invention is susceptible to various modifications and alternative constructions, some preferred embodiments have been shown in the drawings and described in detail.

It should be understood, however, that there is no intention of limiting the invention to the specific illustrated embodiment but, on the contrary, it aims to cover all the modifications, alternative constructions, and equivalents falling within the scope of the invention as defined in the claims.

The use of "for example", "etc.", "or" refers to non-exclusive non-limiting alternatives, unless otherwise stated.

The use of "includes" means "includes but not limited to", unless otherwise stated.

## Claims

1. Device for generating control signals of a boat (1), comprising an electronic control unit (3) configured to generate an output control signal to be sent to one or more actuator elements (24) based on an input control signal, which output control signal is relative to the setting of the operating conditions of said one or more actuator elements (24),
**characterized in that**
said input control signal consists of an audio signal comprising a voice command generated by a user and relating to the travel indications of the boat (1),
said electronic control unit (3) comprising means for acquiring an audio signal and conversion means configured to identify said voice command and convert said voice command into said output control signal.

2. Device according to claim 1, wherein said conversion means comprise memory units within which databases are present containing identifying information of said actuator elements (24) and the operating conditions settings of said actuator elements (24), together with associative tables aimed at associating a voice command with the information present in the databases.

3. Device according to claim 1, wherein said acquisition means comprise audio signal filtering means, which filtering means are configured to isolate the voice command of the user from said audio signal.

4. Device according to one or more of the preceding claims, wherein said acquisition means are connected to said conversion means through wireless communication means.

5. Device according to one or more of the preceding claims, wherein said control unit (3) comprises connecting means for connecting one or more control elements (21, 22).

6. Device according to one or more of the preceding claims, wherein said actuator elements comprise jackplate and/or trim tab and/or bow thruster and/or stern thruster type devices.

7. Method for controlling a boat comprising the following steps:
a) generating at least one input control signal (40) aimed at setting the operating conditions of one or more actuator elements (24) of the boat (1),
b) acquiring (41) said input control signal,
c) generating an output control signal (46) aimed at setting the operation of said actuator elements (24),
**characterized in that**
said input control signal consists of an audio signal (40), providing step c), a step relative to the conversion (45) of said audio signal into said output control signal.

8. Method according to claim 7, wherein step b) involves a filtering step (43) of said audio signal.

9. Method according to claim 8, wherein said filtering step (43) involves detecting the noise (42) generated while the boat (1) is travelling.

10. Method according to claim 7, wherein step b) involves a voice recognition step of the user.

11. Piloting system of a boat (1) comprising one or more actuator elements (24), the setting of which allows changing the speed of the boat (1), one or more control members (21, 22) intended to set the operation of said actuator elements (24) and a central unit (23) adapted to connect said control members (21, 22) to said actuator elements (24), such that said central unit (23) receives one or more input control signals from said control members (21, 22) and generates corresponding output control signals for the setting of said actuator elements (24),
**characterized in that**
said central unit (23) comprises a control unit (3) realized according to one or more of the features of claims 1 to 6.
